# EUROPÄISCHE PATENTSCHRIFT

(11) **EP 2 612 050 B1**
(45) Veröffentlichungstag und Bekanntmachung des Hinweises auf die Patenterteilung: **10.09.2014**
(21) Anmeldenummer: 11787579.9
(22) Anmeldetag: 29.07.2011
(51) Int. Cl.: F16D 13/64

(54) **KUPPLUNGSSCHEIBE**
CLUTCH DISK
DISQUE D'EMBRAYAGE

(30) Priorität: 30.08.2010 DE 102010035800
(43) Veröffentlichungstag der Anmeldung: 10.07.2013
(73) Patentinhaber: Schaeffler Technologies GmbH & Co. KG, 91074 Herzogenaurach (DE)
(72) Erfinder: RUSCH, Alain, 67170 Brumath (FR); KESSLER, Michael, 77815 Bühl (DE)
(86) Internationale Anmeldenummer: PCT/DE2011/001530
(87) Internationale Veröffentlichungsnummer: WO 2012/028131

(56) Entgegenhaltungen:
- DE-A1- 2 920 095
- DE-C2- 3 519 245
- DE-C2- 3 618 878
- DE-C2- 4 010 543
- US-A- 2 263 083

## Beschreibung

Die Erfindung betrifft eine Kupplungsscheibe für eine Kupplungseinrichtung mit zwei Reibbelägen und einer dazwischen angeordneten Federvorrichtung, wobei die Reibbeläge gegen die Kraft der Federvorrichtung zusammendrückbar sind. Außerdem betrifft die Erfindung eine Kupplungseinrichtung mit einer derartigen Kupplungsscheibe.

Derartige Kupplungsscheiben und Kupplungen sind in der Technik in verschiedenen Ausführungen bekannt und werden beispielsweise in Kraftfahrzeugen verwendet. Die Reibbeläge sind üblicherweise ringförmig ausgeführt und weisen außenseitig einen hohen Reibungskoeffizienten auf, so dass diese beim Zusammendrücken zwischen einer axial verschiebbaren Druckplatte und einer Anpressplatte eines Schwungrades bzw. der Sekundärseite eines Zweimassenschwungrades (ZMS) einer Reibungskupplung über Reibschluss drehfest mit dieser verbunden werden und eine Kraftübertragung über die Kupplung stattfindet. Die Druckplatte kann in der Regel mittels einer Tellerfeder, die über ein Ausrücklager durch einen Ausrücker betätigt werden kann, axial bewegt werden. Die Bewegung der Druckplatte betätigt die Kupplung, indem die Druckplatte die Kupplungsscheibe gegen die Anpressplatte drückt und dabei die Reibbeläge und die dazwischen liegende Federvorrichtung zusammengedrückt wird. Dabei entsteht eine Reaktionskraft durch die Federvorrichtung. Diese Reaktionskraft bestimmt die Normalkraft im Reibkontakt und damit das über Reibschluss übertragbare Moment. Die Charakteristik des Kraftaufbaus der Federvorrichtung beim Zusammendrücken der Reibbeläge bestimmt somit im Wesentlichen die Regelbarkeit beziehungsweise Modulierbarkeit der Kupplungseinrichtung. Beim Öffnen der Kupplungseinrichtung wird der Spalt zwischen Druckplatte und Anpressplatte vergrößert, so dass die Reaktionskraft abfällt, bzw. gleich Null ist und kein Moment durch die Kupplung übertragen wird.

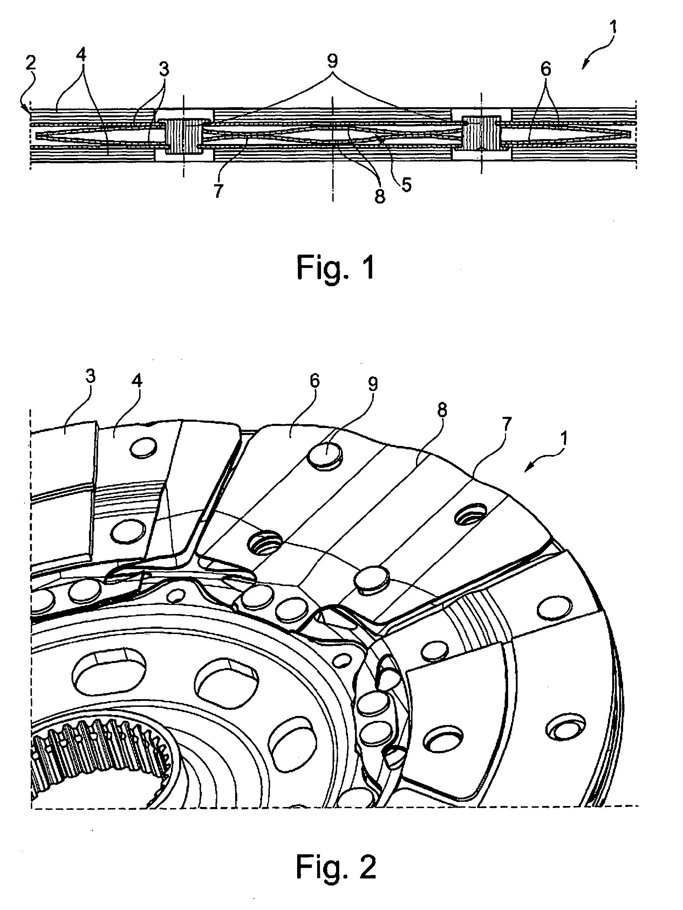

Die Ausgestaltung der Federvorrichtung ist auf unterschiedliche Weisen möglich. Eine Kupplungsscheibe mit einer in der Technik bekannten Federvorrichtung ist in der Figur 1 gezeigt. Die Kupplungsscheibe 1 umfasst zwei Reibbeläge 2, die ein inneres Trägerblech 3 und einen außenseitigen Reibbelag 4 umfassen. Zwischen den Reibbelägen 2 ist eine Federvorrichtung 5 mit zwei gewellten Federsegmenten 6 angeordnet. Die Federsegmente 6 kommen mit übereinstimmenden Wellenbergen 7 miteinander und mit ihrem Wellentälern 8 mit den Trägerblechen 3 in Anlage. Ein axialer Verschiebeweg der Reibbeläge 2 in Richtung voneinander weg wird durch Fangniete 9 begrenzt. Die Länge der Fangniete ist derart gewählt, dass die Federvorrichtung bei Anlage an den Fangnieten im Wesentlichen vorspannungsfrei ist. Die Fangniete kommen nur in Eingriff, wenn zum Beispiel thermische Verzüge oder Unebenheiten der Beläge zu einer erhöhten axialen Ausdehnung der ungespannten Kupplungsscheibe führen würden und dadurch die Reaktionskraft aus der Federvorrichtung der Kupplungsscheibe in der geöffneten Kupplung nicht mehr auf Null gehen würde. Wie in Figur 2 gezeigt ist eine Mehrzahl gewellter Federsegmente 6 in Umfangsrichtung der Kupplungsscheibe 1 angeordnet, um eine in Umfangsrichtung gleichmäßige Krafteinwirkung der Reibbeläge 4 auf entsprechende hier nicht gezeigte Gegenscheiben zu ermöglichen.

An einer solchen Kupplungsscheibe nach Stand der Technik ist nachteilig, dass die Verwendung von gewellten Federsegmenten hohe Anforderungen an deren Fertigungsgenauigkeit stellt. Fertigungsstreuungen bei der Formgebung von gewellten Federsegmenten führen zu streuenden Aufstellhöhen. Damit ergeben sich in Umfangsrichtung Ungleichförmigkeiten in der Dicke der ungespannten Kupplungsscheibe, was zur Neigung der Scheibe zum Rupfen führt. Moderne Fahrzeuge haben jedoch zunehmend hohe Anforderungen betreffend der Vermeidung von Rupfen. Die Fertigung von gewellten Federsegmenten erfordert zudem ein zusätzliches Wellwerkzeug. Dieses Wellwerkzeug erhöht die Kosten der Federsegmentherstellung. Das Wellwerkzeug muss bei der Fertigung von Prototypen jeweils individuell angepasst werden, so dass ein Entwicklungsprozess durch verlängerte Bauzeiten von Prototypen verzögert wird. Bei der Entwicklung ist es üblicherweise erforderlich, das Wellungsprofil mehrmals abzustimmen, um auf die gewünschte Kennlinie der Federvorrichtung zu kommen.

Aus der DE 40 10 543 C2 ist eine Kupplungsscheibe bekannt, die ebenfalls Federsegmente mit einer gewellten, nicht ebenen Form umfasst, die gegenüberliegend positioniert sind und miteinander in Anlage kommen. Durch die Verwendung von Reibbelägen mit innenseitigen Vorsprüngen, an denen die Federbleche gehalten sind, kann die nutzbare Dicke der Reibbeläge vergrößert werden. Entsprechend kann ein teures Reibmaterial, aus dem die Reibbeläge hergestellt sind, effizient genutzt werden. Allerdings führt dies zu einer Erhöhung der axialen Abmessungen der Kupplungsscheibe.

Aus der DE 35 19 245 C2 ist eine Kupplungsscheibe mit einer progressiven Kennlinie bekannt. Dabei ist in einem Segment der Kupplungsscheibe ein einzelnes Federblech an einem ersten Reibbelag gehalten und ist in Richtung zu dem zweiten Reibbelag gewellt. Der zweite Reibbelag weist im Bereich des Federblechs einen Vorsprung auf, der mit dem Federblech in Anlage ist, der erste Reibbelag weist eine Vertiefung auf. Beim Zusammendrücken der Kupplungsscheibe wird das Federblech von dem zweiten Reibbelag gegen die Federkraft in die Vertiefung des ersten Reibbelages gedrückt, wodurch sich eine Verlängerung der Eingriffsprogressivität ergibt. Nachteilig ist auch an dieser Ausgestaltung, dass es zu Ungleichförmigkeiten der Dicke in Umfangsrichtung kommt.

Eine weitere Kupplungsscheibe ist aus der DE 36 18 878 C2 bekannt. Sie umfasst zwei Reibbeläge, die jeweils an einem innenliegenden Trägerblech gehalten sind. An abwechselnd angeordneten Vorsprüngen der Reibbeläge ist ein ebenes Federblech mit beiden Reibbelägen verbunden. Beim Zusammendrücken der Kupplungsscheibe wird das Federblech gegen eine Federkraft elastisch verbogen, indem die Vorsprünge in jeweils an in gegenüberliegenden Reibbelägen ausgebildete Aussparungen geführt werden. Nachteilig daran ist, dass die Absetzung tiefer als die Länge der Belagfederung sein muss. Tiefe Absetzungen bedeuten weniger Verschleißreserve, was zu größerer Belagdicke führt. Dadurch ist mehr Reibmaterial erforderlich und die axiale Ausdehnung der Kupplungsscheibe wird vergrößert.

Eine weitere Kupplungsscheibe ist aus der US 2 263 083 bekannt.

Eine Aufgabe der vorliegenden Erfindung ist es daher, eine Kupplungsscheibe für eine Kupplungsvorrichtung und eine Kupplungsvorrichtung mit einer derartigen Kupplungsscheibe anzugeben, die ein geringes Rupfen aufweist, in axialer Richtung eine geringe Bauhöhe aufweist und mit einer hohen Reproduzierbarkeit der Federeigenschaften kostengünstig herzustellen ist.

Diese Aufgabe wird gelöst durch eine Kupplungsscheibe für eine Kupplungseinrichtung mit zwei Reibbelägen und einer dazwischen angeordneten Federvorrichtung, wobei die Reibbeläge gegen die Kraft der Federvorrichtung zusammendrückbar sind, und wobei an den Innenseiten der beiden Reibbeläge zumindest teilweise überdeckende Aussparungen ausgebildet sind, wobei die Federvorrichtung eine Mehrzahl ebener Federbleche umfasst, die derart positioniert sind, dass sie die übereinstimmenden Aussparungen überspannen, und in dem Bereich der übereinstimmenden Aussparungen Abstandselemente zwischen den Federblechen positioniert sind.

Die Aufgabe wird ebenfalls durch eine Kupplungseinrichtung mit einer derartigen Kupplungsscheibe gelöst.

Ein Grundgedanke der Erfindung besteht also darin, über die Abstandselemente im Zusammenspiel mit den Rändern der Aussparungen eine elastische Verformung der Federbleche zu bewirken. Die Abstandselemente bewirken, dass die Federbleche in einem axialen Abstand gehalten werden. Es wird zusätzlicher Federweg generiert, da die Aussparungen nur die Tiefe des halben Federwegs aufweisen müssen, so dass eine kompakte Bauform der Kupplungsscheibe ermöglicht wird. Die ebenen Federbleche sind kostengünstig und ohne die Verwendung eines besonderen Wellwerkzeugs herzustellen. Damit sind Streuungen in der Federung gering und es ergibt sich über den gesamten Umfang der Kupplungsscheibe eine gleichmäßige Verteilung der Federkraft, wodurch das Rupfen reduziert wird. Abstützkanten der Federbleche, wie sie sich beispielsweise an den Rändern der Aussparungen ergeben, ermöglichen eine Biegung der Federbleche, so dass sich neue Kontaktbereiche bilden. Wenn das Federblech auf eine Kante trifft, erhöht sich die Steifigkeit des Federbleches. Dies führt zu einer progressiven Federkraftkennlinie. Eine Kante kann auch durch einen Rand des Federblechs gebildet werden, wenn dieser durch die elastische Verformung des Federblechs gegen das gegenüberfiegende Federblech oder auch die Abstandsscheibe gepresst wird. Die Spannungsverteilung im Federsegment erlaubt mit dünnen Federblechen Kennlinien zu erreichen, die im Stand der Technik nur mit dickeren Federblechen erreicht werden. Dabei kann die Dicke der Scheibe weiter reduziert werden.

Die Ausrichtung der Federbleche ist prinzipiell unerheblich und kann sowohl in radialer wie auch in Umfangsrichtung erfolgen. Die Ausrichtung in Umfangsrichtung ist weit verbreitet und leistet eine in Umfangsrichtung gleichmäßige Verteilung der Federkraft auf die Reibbeläge. Prinzipiell ist es auch möglich, Federbleche aus einer Mehrzahl Einzelbleche zu verwenden, um die Kennlinie der Federvorrichtung einzustellen. Die Kennlinie kann durch die Ausgestaltung der Kanten der Aussparungen, der Ausgestaltung und Positionierung der Abstandselemente und der Ausgestaltung der Federbleche mit einem gewünschten Verlauf ausgeführt werden.

Vorzugsweise sind die Abstandelemente als Blechelemente ausgeführt. Blechelemente können kostengünstig verarbeitet werden und leicht in einer gewünschten Form bereitgestellt werden, beispielsweise durch Schneiden oder Stanzen. Auch können die Blechelemente mit einem Verbindungsring aus einem Blech hergestellt werden. Dadurch können die Blechelemente gemeinsam montiert werden. Alternativ ist es auch möglich, die Blechelemente an einem gemeinsamen Verbindungsring zu befestigen, beispielsweise durch Nieten.

In vorteilhafter Ausgestaltung der Erfindung sind Kanten der Abstandselemente sowie der Aussparungen und/oder Ränder der Federbleche im Wesentlichen gerade ausgeführt und zumindest teilweise schräg zueinander ausgerichtet. Somit wird beim Zusammendrücken der Reibbeläge der Kontaktbereich zwischen Federblech und der entsprechenden Kante oder dem Rand sukzessive vergrößert, wodurch sich die Steifigkeit des Federbleches entsprechend schrittweise erhöht, so dass sich eine Kennlinie mit einem weichen Übergang zu der höheren Steigung ergibt. Prinzipiell ist es ausreichend, wenn lediglich Kanten der Aussparungen schräg zueinander ausgerichtet sind.

Vorteilhafterweise sind die Federbleche an einem gemeinsamen Verbindungsstück gehalten. Die Federbleche können beispielsweise an einem gemeinsamen Ring, der sowohl außerhalb wie auch innerhalb der Federbleche positioniert sein kann, oder einer Scheibe befestigt sein. Eine Befestigung durch Nieten ist dabei bevorzugt. Somit können die Federbleche gemeinsam montiert werden.

In vorteilhafter Ausgestaltung der Erfindung sind die Federbleche einteilig mit einem gemeinsamen Verbindungsstück ausgeführt. Die Einheit kann aus einem einzelnen Blech gefertigt werden, beispielsweise durch Stanzen oder Schneiden, wobei die Federbleche an einem gemeinsamen Ring oder einer Scheibe gehalten sind. Der Ring kann außerhalb wie auch innerhalb der Federbleche angeordnet sein. Die Einheit kann somit in einem einzigen, gemeinsamen Fertigungsschritt hergestellt und ebenfalls in einem Schritt montiert werden.

Vorzugsweise sind die Federbleche fest mit einer Mitnehmerscheibe verbunden und die Reibbeläge radial und in Umfangsrichtung an den Federblechen fixiert. Bei dieser Ausgestaltung entfällt eine separate Montage der Reibbeläge an der Mitnehmerscheibe. Die Federbleche können durch Nieten unmittelbar an der Mitnehmerscheibe angebracht sein. Alternativ können die Federbleche über das gemeinsame Verbindungsstück an der Mitnehmerscheibe angebracht sein.

In vorteilhafter Ausgestaltung der Erfindung sind die Reibbeläge jeweils mit einem Trägerblech fest verbunden, beispielsweise vernietet oder verklebt. Die Aussparungen sind in dem Trägerblech ausgebildet, so dass der Reibbelag als Abriebreserve nutzbar ist. Wenn die Dicke des Trägerblechs der halben Belagfederungs-Istlänge entspricht, ist es ausreichend, die Aussparung ausschließlich in dem Trägerblech auszubilden. Der Reibbelag kann durch Kleben oder mit Hilfe von Nieten an dem Trägerblech befestigt werden.

Vorzugsweise sind die Reibbeläge einteilig aus einem Reibmaterial gebildet. Es ist kein zusätzlicher Montageschritt zur Herstellung der Reibbeläge erforderlich, und die Aussparungen sind in dem Reibelement ausgeformt. Durch die Aussparungen wird der nicht als Reibreserve nutzbare Teil des Reibmaterials minimiert.

In vorteilhafter Ausgestaltung der Erfindung ist das Abstandselement ein an wenigstens einem Federblech gehalten. Das Abstandselement kann beispielsweise der Kopf eines einzelnen Nietes sein, das in einem der Federbleche befestigt ist, oder das Abstandsstück wird beispielsweise mit einem Niet an dem Federblech gehalten. Auch ist es möglich, den Niet an beiden Federblechen zu befestigen, so dass dieser insgesamt als Abstandsstück dient. Durch ein Zwischenstück oder an dem Niet ausgebildeten Nuten werden die Federbleche auf einem festen axialen Abstand gehalten. Beim Zusammendrücken der Reibbeläge wird das Abstandsstück durch die axiale Fixierung nicht in einen Verschleißbereich der Reibbeläge verschoben, so dass die Kupplungsscheibe eine geringe axiale Ausdehnung aufweist.

Hinsichtlich weiterer vorteilhafter Ausgestaltungen der Erfindung wird auf die Unteransprüche sowie nachfolgende Beschreibung von Ausführungsbeispielen unter Bezugnahme auf die beiliegende Zeichnung verwiesen. In der Zeichnung zeigen:
- Figur 1: ein Segment einer im Stand der Technik bekannten Kupplungsscheibe in Schnittansicht,
- Figur 2: ein Segment der Kupplungsscheibe aus Figur 1 mit teilweise entfernten Reibbelägen und Trägerblech in perspektivischer Ansicht,
- Figur 3: ein Segment einer erfindungsgemäßen Kupplungsscheibe gemäß einer ersten Ausführungsform im entspannten Zustand in Schnittansicht,
- Figur 4: ein Segment der Kupplungsscheibe aus Figur 3 mit teilweise entfernten Reibbelägen und Trägerblech in perspektivischer Ansicht,
- Figur 5: die Kupplungsscheibe aus Figur 3 in Explosionsansicht,
- Figur 6: die Ansicht aus Figur 3 mit zusätzlich markierten Kantenbereichen der Aussparungen und der Federbleche,
- Figur 7: das Segment Kupplungsscheibe gemäß Figur 6 in Draufsicht,
- Figur 8: das Segment der Kupplungsscheibe aus Figur 3 im zusammengedrückten Zustand in Schnittansicht,
- Figur 9: ein Diagramm mit Federkennlinien für parallel und schräg angeordnete Kanten,
- Figur 10: ein Segment einer erfindungsgemäßen Kupplungsscheibe gemäß einer zweiten Ausführungsform im entspannten Zustand in Schnittansicht,
- Figur 11: eine erfindungsgemäße Kupplungsscheibe gemäß einer dritten Ausführungsform mit teilweise entfernten Reibbelägen und Trägerblech in perspektivischer An sicht,
- Figur 12: ein Segment einer erfindungsgemäßen Kupplungsscheibe aus Figur 11 im entspannten Zustand in Schnittansicht,
- Figur 13: eine erfindungsgemäße Kupplungsscheibe gemäß einer vierten Ausführungsform in Explosionsansicht,
- Figur 14: einen Teil der Kupplungsscheibe aus Figur 13 mit teilweise entfernten Reibbelägen und Trägerblech in perspektivischer Ansicht, und
- Figur 15: ein Segment einer erfindungsgemäßen Kupplungsscheibe gemäß einer fünften Ausführungsform im entspannten Zustand in Schnittansicht.

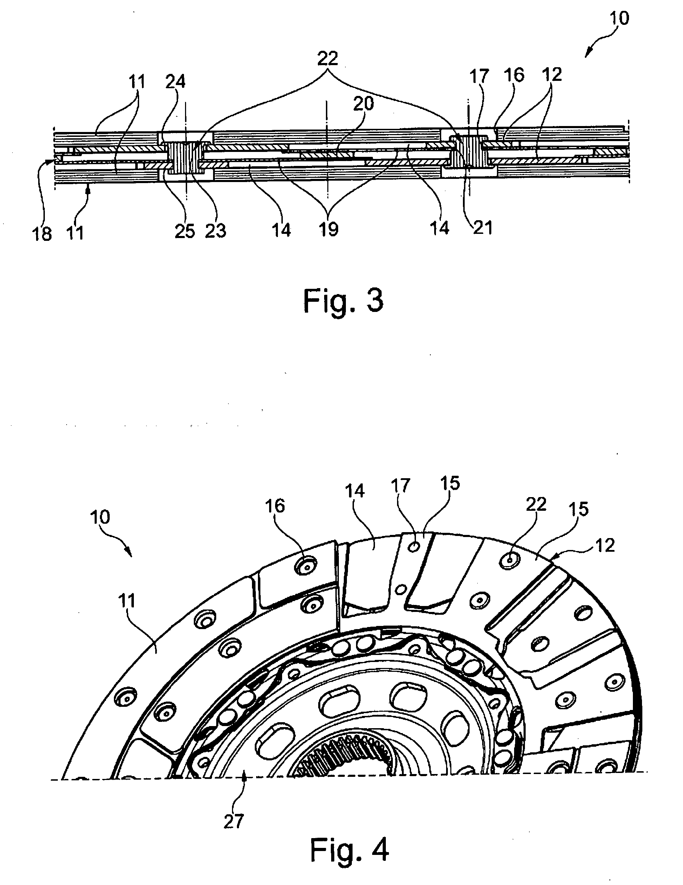

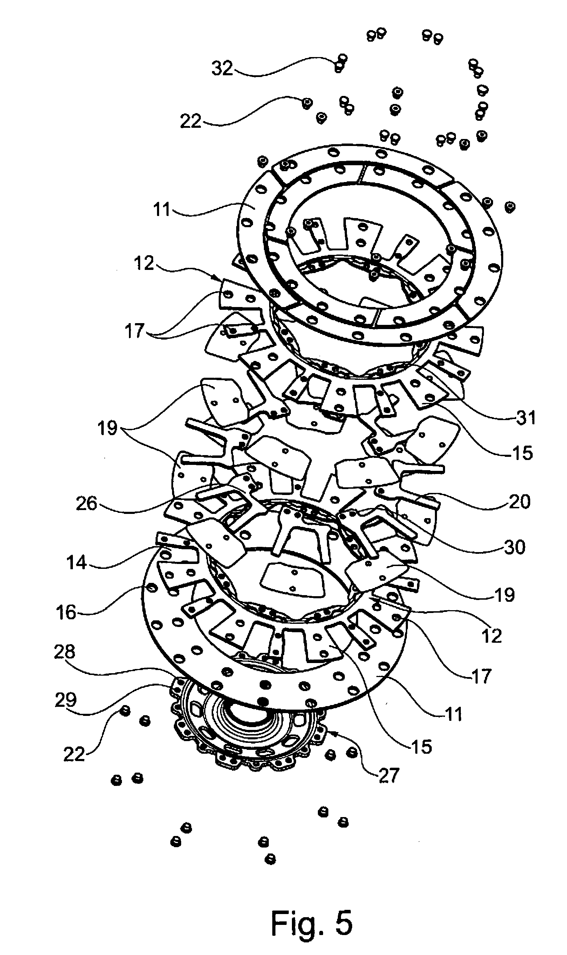

Die Figuren 3 bis 8 zeigen eine Kupplungsscheibe 10 gemäß einer ersten Ausführungsform der vorliegenden Erfindung. Die Kupplungsscheibe 10 umfasst zwei Reibbeläge 11 mit jeweils einem dem Reibbelag 11 zugeordneten Trägerblech 12. Die Trägerbleche 12 und die Reibbeläge 11 sind jeweils ringförmig ausgebildet und miteinander verklebt. An dem Trägerblech 12 ist in Umfangsrichtung eine Mehrzahl regelmäßig angeordneter Aussparungen 14 ausgebildet. Die Aussparungen 14 weisen im Wesentlichen eine Rechteckform auf und sind radial nach außen geöffnet, sodass zwischen den Aussparungen 14 eine Mehrzahl radial ausgerichteter Tragstege 15 verbleibt. Die Trägerbleche 12 und die Reibbeläge 11 weisen korrespondierende Durchgangslöcher 16, 17 auf, wobei der Durchmesser der Durchgangslöcher 16 der Reibbeläge 11 größer als der Durchmesser der Durchgangslöcher 17 der Trägerbleche 12 ist.

Die Kupplungsscheibe 10 umfasst weiterhin eine Federvorrichtung 18 mit einer Mehrzahl ebener Federbleche 19 und Blechelementen 20. Die Federbleche 19 sind entlang der Innenseite jedes Trägerbleches 12 ringförmig angeordnet, wobei die Federbleche 19 an den beiden Trägerblechen 12 bzw. Reibbelägen 11 versetzt positioniert sind, so dass jedes Federblech 19 mit zwei weiteren Federblechen 19 teilweise überlappend angeordnet ist. Die Form der Federbleche 19 ist jeweils identisch und entspricht näherungsweise einem Ringsegment. Federvorrichtung 18 und Trägerblech 12 sind so dimensioniert, dass die Dicke des Trägerblechs mindestens dem halben Federweg der Federvorrichtung 18 entspricht.

In Umfangsrichtung mittig sind in jedem Federblech 19 zwei Bohrungen 21 vorgesehen, mit denen die Federbleche 19 an den Tragstegen 15 radial und in Umfangsrichtung mit Stufennieten 22 gehalten sind. Die Stufennieten 22 umfassen einen Bund 23 mit einem Setzkopf 24 und sind in dem Durchgangsloch16 vernietet. Die Vernietung klemmt die Öffnung 17 der Trägerbleche 12 und der Federelemente 19 zusammen, wobei deren Setzköpfe 24 von der Außenseite an dem Trägerblech 12 anliegen. Der Nietschaft wird vernietet, so dass die Federelemente 19 und Trägerbleche 12 mit dem Niet verklemmt sind. Dadurch wird ein Schließkopf gebildet.

Zwischen den Federblechen 19 sind Blechelemente 20 als Abstandsbleche positioniert. Die Blechelemente 20 sind stegförmig ausgebildet und erstrecken sich in radialer Richtung. An ihrem radial innenliegenden Ende sind jeweils zwei benachbarte Blechelemente 20 über eine Brücke 26 miteinander verbunden. Die Blechelemente 20 sind in Umfangsrichtung jeweils im Bereich der Aussparungen 14 und der Federbleche 19 positioniert.

Die Reibbeläge 11 und Blechelemente 20 sind an einer Mitnehmerscheibe 27 für eine drehfeste Montage auf einer hier nicht gezeigten Welle montiert. Die Mitnehmerscheibe 27 weist an ihrem radial äußeren Bereich eine Mehrzahl Vorsprünge 28 auf, die in Umfangsrichtung gleichmäßig verteilt angeordnet und jeweils mit zwei Bohrungen 29 ausgeführt sind. Die Trägerbleche 12, die Reibbeläge 11 und die Blechelemente 20 an ihren Brücken 26 weisen in einem radial innenliegenden Bereich mit den Bohrungen 29 korrespondiere Löcher 30, 31 auf und sind über Befestigungsnieten 32 an der Mitnehmerscheibe 27 gehalten.

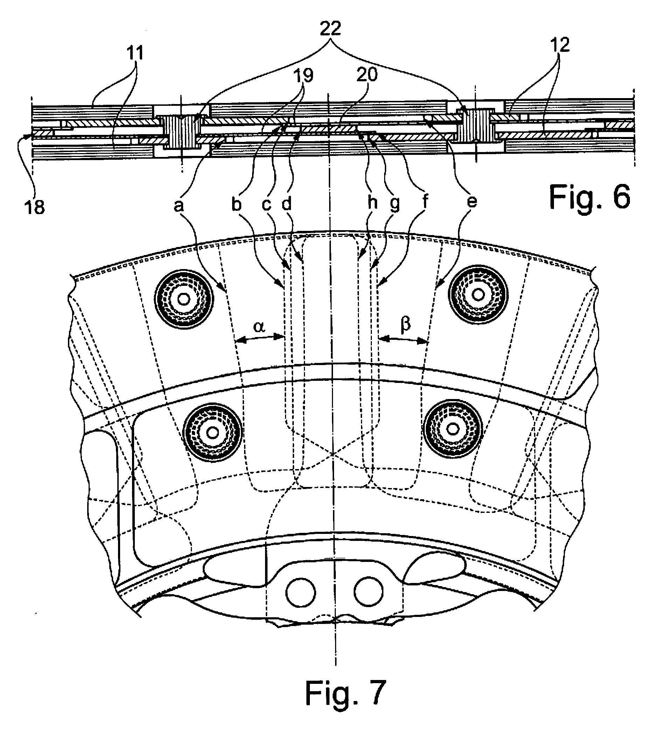

In den Figuren 6 und 7 ist die Ausgestaltung der Federvorrichtung 18 im Bereich eines Paares korrespondierender Aussparungen 14 der zwei Trägerbleche 12 im Detail gezeigt. Die Umfangsrichtung angeordneten Kanten d, h des Blechelementes 20, die Kanten c, g der Aussparungen 14 und die Ränder b, f der Federbleche 19 sind parallel zueinander angeordnet. Die Kanten a, e der Aussparungen 14 verlaufen mit einem Winkel α bzw. β zu den übrigen Kanten c, d, g, h und den Rändern b, f.

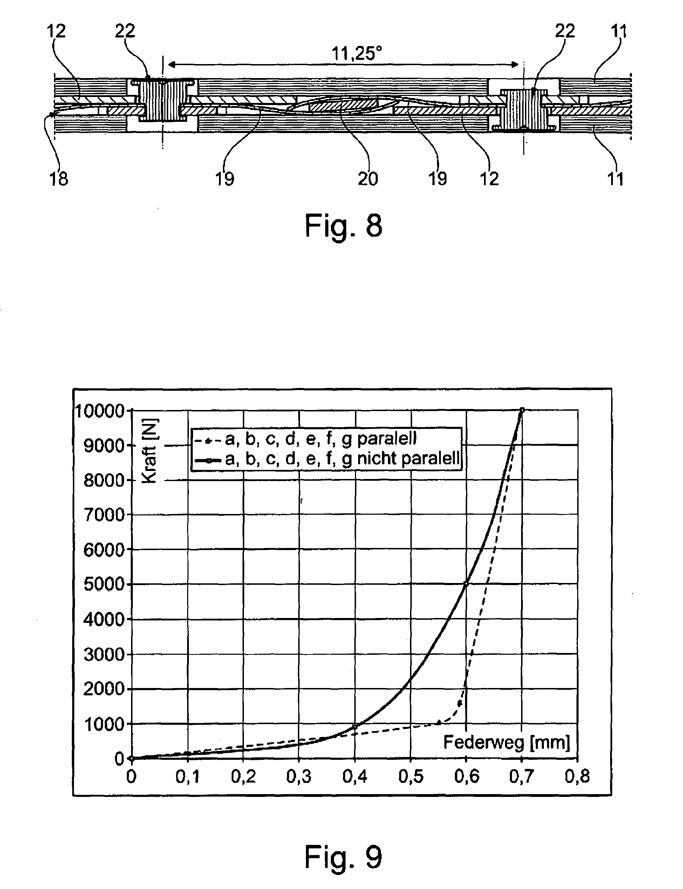

Wird die Kupplungsscheibe beim Schließen der Kupplung zwischen der Druckplatte und der Anpressplatte in axialer Richtung eingeklemmt, so erfolgt eine Verformung der Federbleche 19 über die Kanten a, c, d, e, g, h der Aussparungen 14 und Blechelemente 20. Eine weitere Verformung der Federbleche 19 führt dazu, dass ihre Ränder b, f mit dem jeweils gegenüberliegenden Federblech 19 in Anlage kommen, wie in Figur 8 im Detail gezeigt ist. Dabei findet ein Kontakt der Ränder b, f der gegenüberliegenden Federbleche 19 mit dem jeweils gegenüberliegenden Federblech 19 zuerst nur in einem Punkt statt. Die Kontaktzone vergrößert sich dann bei zunehmendem Einfedern entlang der Ränder b und f, bis diese vollständig an den gegenüberliegenden Federblechen 19 anliegen, wodurch sich eine progressive Federkraftkennlinie ergibt, wie in Figur 9 gezeigt ist. Dort ist zum Vergleich ebenfalls eine Kennlinie für den Fall der gezeigt, dass die Kanten a, e der Aussparungen 14 ebenfalls parallel zu den Kanten c, d, h, g der Aussparungen 14 und Blechelemente 20 ausgeführt sind.

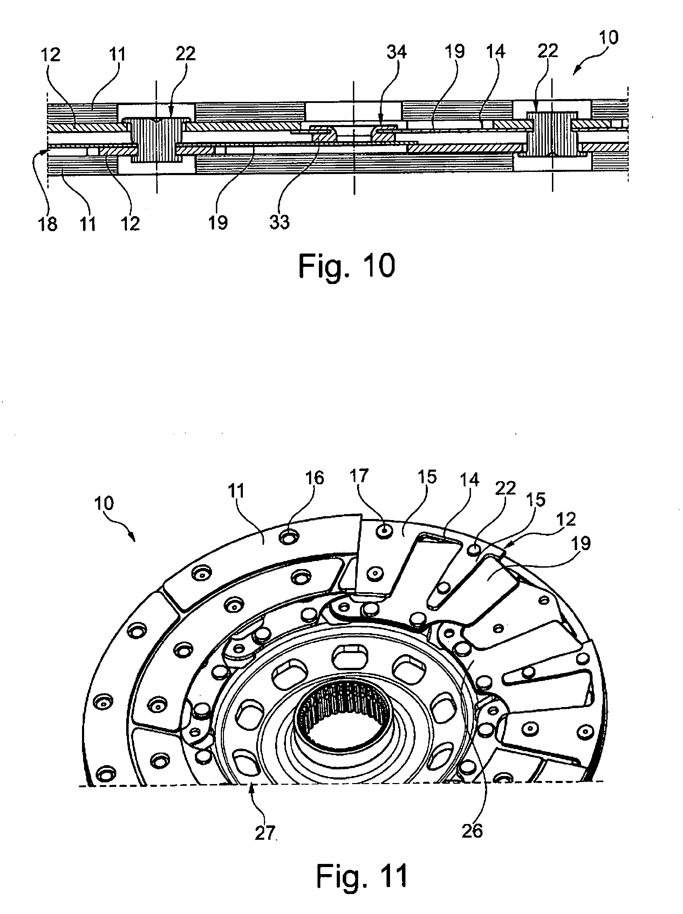

Figur 10 zeigt eine zweite Ausführungsform einer erfindungsgemäßen Kupplungsscheibe 10. Die Kupplungsscheibe 10 unterscheidet sich von der des ersten Ausführungsbeispiels lediglich dadurch, dass die Abstandselemente jeweils durch einen Kopf 33 eines Nietes 34 gebildet sind, der an jeweils einem der Federbleche 19 gehalten ist. Der Kopf 33 kann prinzipiell beliebig geformt sein, um eine Federkraftkennlinie mit einem gewünschten Verkauf zu realisieren. Der weitere Aufbau und die Funktion der Kupplungsscheibe 10 des zweiten Ausführungsbeispiels stimmen mit dem Aufbau und der Funktion der Kupplungsscheibe 10 des ersten Ausführungsbeispiels überein und werden daher nicht im Detail beschrieben.

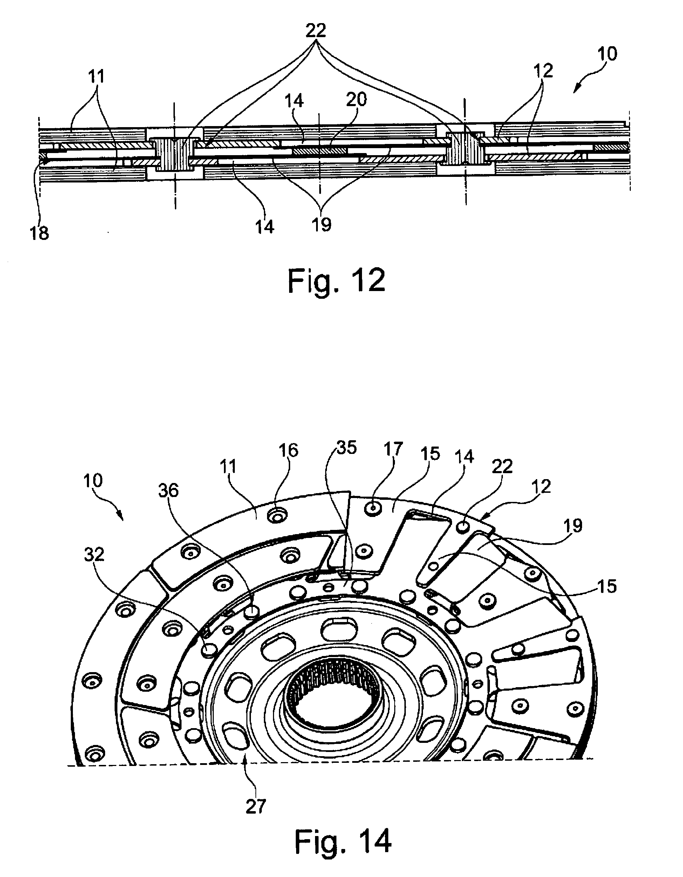

Die Figuren 11 und 12 zeigen eine dritte Ausführungsform einer erfindungsgemäßen Kupplungsscheibe 10. Die Kupplungsscheibe 10 unterscheidet sich dadurch von der des ersten Ausführungsbeispiels, dass die Reibbeläge 11 nicht direkt an der Mitnehmerscheibe 27 gehalten sind. Entsprechend weisen die Trägerbleche 12 radial innenliegend keine Befestigungslöcher auf. Die Reibbeläge 11 werden über Federbleche 19, die an einer Mitnehmerscheibe 27 wie zuvor beschrieben mit Befestigungsnieten 32 befestigt sind, an der Mitnehmerscheibe 27 gehalten. Das Trägerblech 12 ist derart gestaltet, dass die Aussparungen 14 nach innen geöffnet sind und sich entsprechend die Stege 15 von einem radial äußeren Bereich des Trägerblechs 12 radial nach innen erstrecken. Der weitere Aufbau und die Funktion der Kupplungsscheibe 10 des dritten Ausführungsbeispiels stimmen mit dem Aufbau und der Funktion der Kupplungsscheibe 10 des ersten Ausführungsbeispiels überein und werden daher nicht im Detail beschrieben.

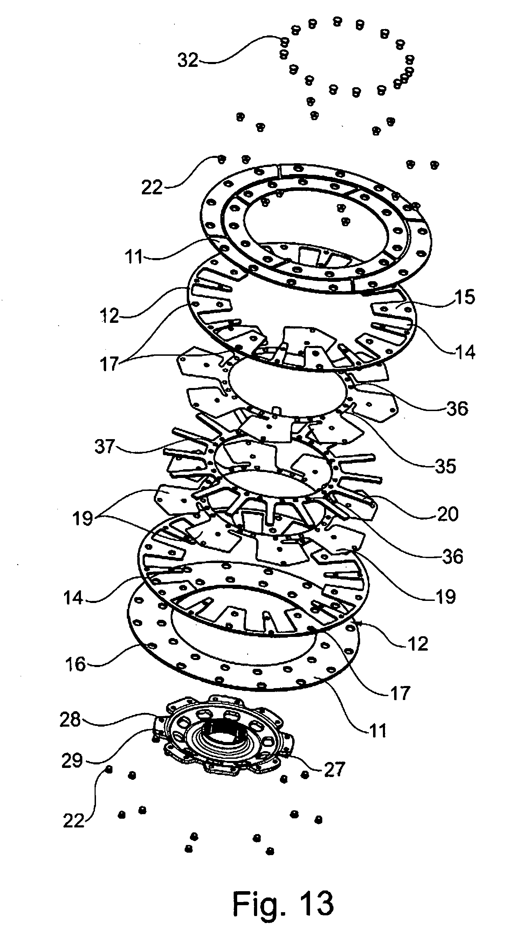

Die Figuren 13 und 14 zeigen ein viertes Ausführungsbeispiel einer erfindungsgemäßen Kupplungsscheibe 10. Die Kupplungsscheibe 10 unterscheidet sich dadurch von der des dritten Ausführungsbeispiels, dass die Federbleche 19 einteilig mit einem gemeinsamen Haltering 35 als Verbindungsstück ausgeführt sind. In dem Haltering sind Befestigungslöcher 36 zur Verbindung mit einer Mitnehmerscheibe 27 entsprechend dem dritten Ausführungsbeispiel vorgesehen. Federbleche 19 und Haltering 35 sind in einem Schritt aus einem nicht gezeigten ebenen Blech gestanzt. Außerdem unterscheidet sich die Kupplungsscheibe 10 dadurch, dass die Blechelemente 20 einteilig mit einem gemeinsamen Verbindungsring 37 ausgeführt sind. In dem Verbindungsring 37 sind Befestigungslöcher 38 zur Verbindung mit einer Mitnehmerscheibe 27 entsprechend dem dritten Ausführungsbeispiel vorgesehen. Blechelemente 20 und Verbindungsring 36 sind in einem Schritt aus einem nicht gezeigten ebenen Blech gestanzt. Die Montage der Federbleche 19 ist durch Verbinden des Halteringes 35 und die Montage der Blechelemente 20 durch Verbinden des Verbindungsringes 37 mit der Mitnehmerscheibe 27 in einem Schritt mit den Befestigungsnieten 32 jeweils gemeinsam erfolgt. Der weitere Aufbau und die Funktion der Kupplungsscheibe 10 des vierten Ausführungsbeispiels stimmen mit dem Aufbau und der Funktion der Kupplungsscheibe 10 des dritten Ausführungsbeispiels überein und werden daher nicht im Detail beschrieben.

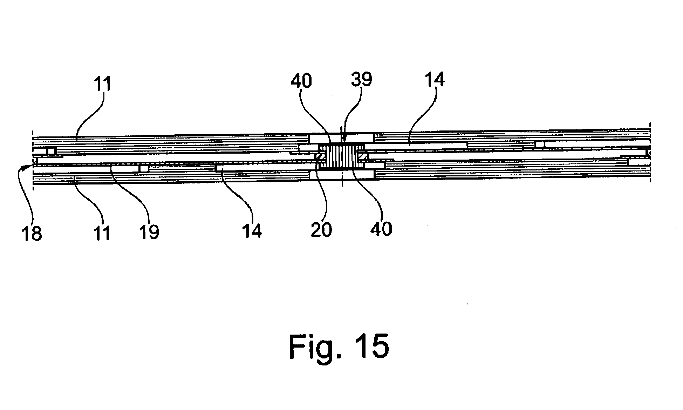

Figur 15 zeigt ein fünftes Ausführungsbeispiels einer erfindungsgemäßen Kupplungsscheibe 10. Die Kupplungsscheibe 10 ist soweit nicht abweichend beschrieben identisch zu der des ersten Ausführungsbeispiels.

Die Kupplungsscheibe 10 umfasst einteilig ausgebildete Reibbeläge 11, die aus einem Reibmaterial hergestellt sind. Entsprechend sind in den Reibbelägen 11 innenseitige Aussparungen 14 ausgebildet. Eine Federvorrichtung 18 gemäß dem fünften Ausführungsbeispiel umfasst ebene Federbleche 19, die in ihrem Mittelbereich mit den Reibbelägen 11 verklebt sind. Die Anordnung der Federbleche 19 ist entsprechend der des ersten Ausführungsbeispiels. Die Federbleche 19 sind im Bereich der Aussparungen 14 mit Abstandsnieten 39 verbunden, die sich durch korrespondierende Durchgangslöcher 40 in den Federblechen 19 erstrecken. Die Abstandsnieten 39 weisen an jedem Ende einen Kopf 41 auf, der außenseitig an dem jeweiligen Federblech 19 in Anlage kommt. Zwischen den Federblechen 19 ist jeweils ein Blechelement 20 entsprechend dem des ersten Ausführungsbeispiels positioniert, das zusätzlich eine Bohrung 42 aufweist. Die entsprechende Abstandsniete 39 durchgreift die Bohrung 42, sodass die entsprechenden Federbleche 19 in axialer Richtung in Bereich der Abstandsnieten 39 einen festen Abstand aufweisen. In alternativen Ausführungsformen können die Blechelemente 20 prinzipiell eine beliebige Form aufweisen. Beispielsweise können sie auch als Ringscheiben ausgeführt sein. Die in den vorhergehenden Ausführungsbeispielen verwendeten Stufennieten sind bei diesem Ausführungsbeispiel nicht vorhanden.

### Bezugszeichenliste

- 1: Kupplungsscheibe
- 2: Reibbelag
- 3: Trägerblech
- 4: Reibbelag
- 5: Federvorrichtung
- 6: Federsegment
- 7: Wellenberg
- 8: Wellental
- 9: Fangniete
- 10: Kupplungsscheibe
- 11: Reibbelag
- 12: Trägerblech
- 14: Aussparung
- 15: Tragsteg
- 16: Durchgangsloch
- 17: Durchgangsloch
- 18: Federvorrichtung
- 19: Federblech
- 20: Blechelement
- 21: Bohrung
- 22: Stufenniete
- 23: Bolzen
- 24: Setzkopf
- 25: Schließkopf
- 26: Brücke
- 27: Mitnehmerscheibe
- 28: Vorsprung
- 29: Bohrung
- 30: Loch
- 31: Loch
- 32: Befestigungsniete
- 33: Kopf
- 34: Niete
- 35: Haltering
- 36: Befestigungsloch
- 37: Verbindungsring
- 38: Befestigungsloch
- 39: Abstandsniete
- 40: Durchgangsloch
- 41: Kopf
- 42: Bohrung
- a: Kante
- b: Rand
- c: Kante
- d: Kante
- e: Kante
- f: Rand
- g: Kante
- h: Kante
- α: Winkel
- β: Winkel

## Patentansprüche

1. Kupplungsscheibe (10) für eine Kupplungseinrichtung mit zwei Reibbelägen (11) und einer dazwischen angeordneten Federvorrichtung (18), wobei die Reibbeläge (11) gegen die Kraft der Federvorrichtung (18) zusammendrückbar sind, wobei an den Innenseiten der beiden Reibbeläge (11) zumindest teilweise überdeckende Aussparungen (14) ausgebildet sind, die Federvorrichtung (18) eine Mehrzahl ebener Federbleche (19) umfasst, die derart positioniert sind, dass sie die übereinstimmenden Aussparungen (14) überspannen **dadurch gekennzeichnet, dass** in dem Bereich der übereinstimmenden Aussparungen (14) Abstandselemente (20, 33) zwischen den Federblechen (19) positioniert sind.

2. Kupplungsscheibe (10) nach Anspruch 1, **dadurch gekennzeichnet, dass** Kanten (a, c, d, f, g, h) der Abstandselemente (20, 33) sowie der Aussparungen (14) und/oder Ränder (b, e) der Federbleche (19) im Wesentlichen gerade ausgeführt und zumindest teilweise schräg zueinander ausgerichtet sind.

3. Kupplungsscheibe (10) nach einem der Ansprüche 1 oder 2, **dadurch gekennzeichnet, dass** die Federbleche (19) an einem gemeinsamen Verbindungsstück (35) gehalten sind.

4. Kupplungsscheibe (10) nach einem der Ansprüche 1 oder 2, **dadurch gekennzeichnet, dass** die Federbleche (19) einteilig mit einem gemeinsamen Verbindungsstück (35) ausgeführt sind.

5. Kupplungsscheibe (10) nach einem der vorhergehenden Ansprüche, **dadurch gekennzeichnet, dass** die Federbleche (19) fest mit einer Mitnehmerscheibe (27) verbunden und die Reibbeläge (11) radial und in Umfangsrichtung an den Federblechen (19) fixiert sind.

6. Kupplungsscheibe (10) nach einem der vorhergehenden Ansprüche, **dadurch gekennzeichnet, dass** die Reibbeläge (11) jeweils mit einem Trägerblech (12) fest verbunden sind.

7. Kupplungsscheibe (10) nach einem der Ansprüche 1 bis 6, **dadurch gekennzeichnet, dass** die Reibbeläge (11) einteilig aus einem Reibmaterial gebildet sind.

8. Kupplungsscheibe (10) nach einem der vorhergehenden Ansprüche, **dadurch gekennzeichnet, dass** die Abstandelemente als Blechelemente (20) ausgeführt sind.

9. Kupplungsscheibe (10) nach einem der vorhergehenden Ansprüche, **dadurch gekennzeichnet, dass** das Abstandselement (20, 33) an wenigstens einem Federblech (19) gehalten ist.

10. Kupplungseinrichtung mit einer Kupplungsscheibe (10) nach einem der vorhergehenden Ansprüche.

## Claims

1. Clutch disk (10) for a clutch arrangement with two friction linings (11) and with a spring device (18) arranged between these, the friction linings (11) being capable of being pressed together counter to the force of the spring device (18), at least partially overlapping clearances (14) being formed on the insides of the two friction linings (11), and the spring device (18) comprising a plurality of planar spring plates (19) which are positioned in such a way that they span the coincidental clearances (14), **characterized in that** spacer elements (20, 33) are positioned between the spring plates (19) in the region of the coincidental clearances (14).

2. Clutch disk (10) according to Claim 1, **characterized in that** edges (a, c, d, f, g, h) of the spacer elements (20, 33) and of the clearances (14) and/or margins (b, e) of the spring plates (19) are formed to be essentially straight and are at least partially oriented obliquely to one another.

3. Clutch disk (10) according to either one of Claims 1 and 2, **characterized in that** the spring plates (19) are held at a common connection piece (35).

4. Clutch disk (10) according to either one of Claims 1 and 2, **characterized in that** the spring plates (19) are formed in one part with a common connection piece (35).

5. Clutch disk (10) according to one of the preceding claims, **characterized in that** the spring plates (19) are connected fixedly to a driver disk (27) and the friction linings (11) are fixed to the spring plates (19) radially and in the circumferential direction.

6. Clutch disk (10) according to one of the preceding claims, **characterized in that** the friction linings (11) are connected fixedly in each case to a carrier plate (12) .

7. Clutch disk (10) according to one of Claims 1 to 6, **characterized in that** the friction linings (11) are formed in one part from a frictional material.

8. Clutch disk (10) according to one of the preceding claims, **characterized in that** the spacer elements are formed as sheet metal elements (20).

9. Clutch disk (10) according to one of the preceding claims, **characterized in that** the spacer element (20, 33) is held at at least one spring plate (19).

10. Clutch arrangement having a clutch disk (10) according to one of the preceding claims.

## Revendications

1. Disque d'embrayage (10) pour un dispositif d'embrayage comprenant deux garnitures de friction (11) et un dispositif de ressort (18) disposé entre celles-ci, les garnitures de friction (11) pouvant être comprimées à l'encontre de la force du dispositif de ressort (18), des évidements (14) se recouvrant au moins partiellement étant réalisés sur les côtés intérieurs des deux garnitures de friction (11), et le dispositif de ressort (18) comportant une pluralité de tôles élastiques (19) planes qui sont positionnées de telle sorte qu'elles recouvrent les évidements (14) correspondants, **caractérisé en ce que** des éléments d'écartement (20, 33) sont positionnés entre les tôles élastiques (19) dans la région des évidements (14) correspondants.

2. Disque d'embrayage (10) selon la revendication 1, **caractérisé en ce que** des arêtes (a, c, d, f, g, h) des éléments d'écartement (20, 33) ainsi que des évidements (14) et/ou des bords (b, e) des tôles élastiques (19) sont réalisé(e)s de manière essentiellement rectiligne et sont orienté(e)s de manière au moins partiellement inclinée les un(e)s par rapport aux autres.

3. Disque d'embrayage (10) selon l'une quelconque des revendications 1 et 2, **caractérisé en ce que** les tôles élastiques (19) sont maintenues sur une pièce de liaison (35) commune.

4. Disque d'embrayage (10) selon l'une quelconque des revendications 1 et 2, **caractérisé en ce que** les tôles élastiques (19) sont réalisées d'un seul tenant avec une pièce de liaison (35) commune.

5. Disque d'embrayage (10) selon l'une quelconque des revendications précédentes, **caractérisé en ce que** les tôles élastiques (19) sont reliées fixement à un disque d'entraînement (27) et les garnitures de friction (11) sont fixées radialement et dans la direction périphérique aux tôles élastiques (19).

6. Disque d'embrayage (10) selon l'une quelconque des revendications précédentes, **caractérisé en ce que** les garnitures de friction (11) sont à chaque fois reliées fixement à une tôle de support (12).

7. Disque d'embrayage (10) selon l'une quelconque des revendications 1 à 6, **caractérisé en ce que** les garnitures de friction (11) sont formées d'un seul tenant en un matériau de friction.

8. Disque d'embrayage (10) selon l'une quelconque des revendications précédentes, **caractérisé en ce que** les éléments d'écartement sont réalisés sous forme d'éléments en tôle (20).

9. Disque d'embrayage (10) selon l'une quelconque des revendications précédentes, **caractérisé en ce que** l'élément d'écartement (20, 33) est maintenu sur au moins une tôle élastique (19).

10. Dispositif d'embrayage comprenant un disque d'embrayage (10) selon l'une quelconque des revendications précédentes.
